# EUROPEAN PATENT APPLICATION

(11) **EP 2 810 892 A1**
(43) Date of publication of application: **10.12.2014**
(21) Application number: 14170463.5
(22) Date of filing: 29.05.2014
(51) Int. Cl.: B65D 41/04

(54) **Childproof perfume bottle**

(30) Priority: 08.06.2013 CN 201310228825
(71) Applicant: Zhongshan Fuji Chemical Co., Ltd., 528436 Zhongshan Guangdong (CN)
(72) Inventor: Chen, Zhiwei, 528436 Zhongshan, Guangdong (CN)
(74) Representative: Hryszkiewicz, Danuta

(57) **Abstract**

A childproof perfume bottle including a bottle body (1) and a bottle cap (2) covering the bottle body. The bottle body includes an upper connection part (11) including an external wall (12) including a male screw (13). The bottle cap includes an internal wall (21) including a female screw (23) matching the male screw of the external wall. The external wall of the upper connection part includes a bulge(14), and a stop piece (15) is disposed at one end of the bulge. The internal wall of the bottle cap includes a clamping block (24) which is capable of tightly fitting the bulge of the external wall after revolving the bottle cap to a certain angle.

## Description

The invention relates to a childproof perfume bottle.

Conventional perfume bottles do not have a childproof structure, so it is easy for a child to remove the bottle cap. As a result, the perfume in the bottle is volatile quickly, causing the waste of resources. Furthermore, the perfume may be eaten by children by mistake, thereby bringing about hidden danger.

In view of the above-described problems, it is one objective of the invention to provide a perfume bottle that is difficult for the children to remove the bottle cap from the bottle body. The childproof perfume bottle has a simple structure, safe design, and low production costs.

To achieve the above objective, in accordance with one embodiment of the invention, there is provided a perfume bottle comprising a bottle body and a bottle cap covering the bottle body. The bottle body comprises an upper connection part comprising an external wall comprising a male screw. The bottle cap comprises an internal wall comprising a female screw matching the male screw of the external wall. The external wall of the upper connection part comprises a bulge, and a stop piece is disposed at one end of the bulge. The internal wall of the bottle cap comprises a clamping block which is capable of tightly fitting the bulge of the external wall after revolving the bottle cap to a certain angle.

In a class of this embodiment, a transition slope is disposed at another end of the bulge to facilitate the clamping block to slide to fit tightly the bulge.

In a class of this embodiment, a clamping slope is disposed at one end of the clamping block to facilitate the clamping block to slide to fit tightly the bulge.

In a class of this embodiment, the male screw of the external wall of the bottle body comprises a starting point at a lower part of the external wall and an end point at an upper part of the external wall, and the bulge and the stop piece are disposed at front of the starting point of the male screw.

In a class of this embodiment, the female screw of the internal wall of the bottle cap comprises a starting point at a lower part of the internal wall and an end point at an upper part of the internal wall, and the clamping block is disposed at front of the starting point of the female screw.

In a class of this embodiment, the stop piece, the bulge, and the transition slope are integrated, and the bottle body, the stop piece, the bulge, and the transition slope are integrated.

In a class of this embodiment, the clamping block and the clamping slope are integrated, and the bottle cap, the clamping block, and the clamping slope are integrated.

In a class of this embodiment, an air vent is disposed at a top surface of the bottle cap.

In a class of this embodiment, a sealing ring is disposed at a lower part of the external wall of the upper connection part of the bottle body, and the stop piece, the bulge, and the transition slope are disposed above the sealing ring.

In a class of this embodiment, upper surfaces of the clamping block and the clamping slope are a convex arc in shape.

Advantages according to embodiments of the invention are summarized below. The bottle body of the perfume bottle and the bottle cap of the perfume bottle are in nonrigid connection. When the bottle cap is screwed up, the clamping block of the internal wall of the bottle cap tightly fits the bulge of the external wall of the bottle body. The clamping between the clamping block and the bulge is so tight that a child has no enough strength to detach the clamping block from the bulge. Thus, the child cannot remove the bottle cap from the bottle body. Only an adult who has enough strength can do so. Therefore, the perfume bottle of the invention is safe for children, which has a simple structure, safe design, and low production costs.

The invention is described hereinbelow with reference to the accompanying drawings, in which:

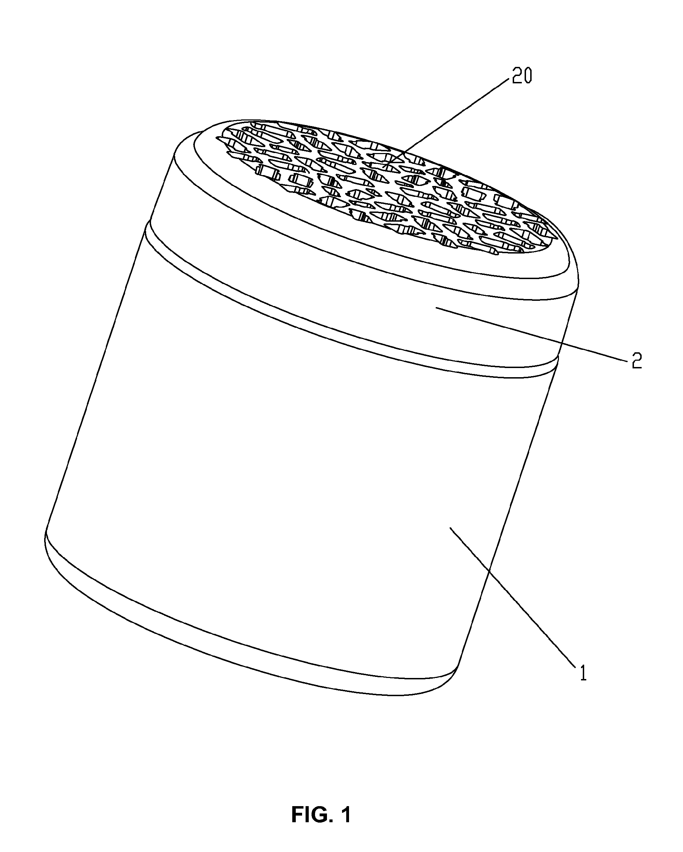

FIG. 1 is a stereogram of a perfume bottle in accordance with one embodiment of the invention;

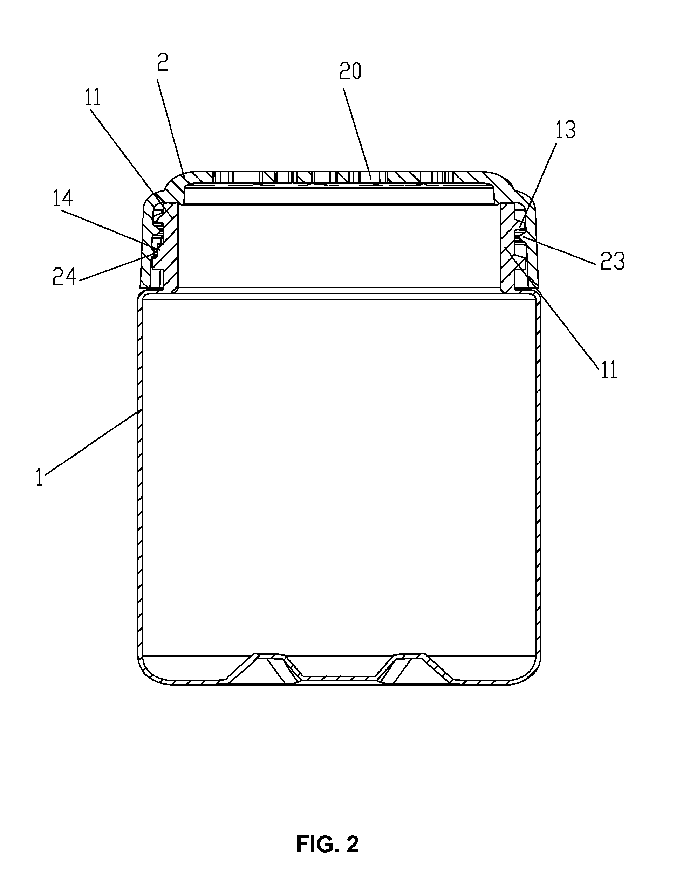

FIG. 2 is a longitudinal section view of a perfume bottle in accordance with one embodiment of the invention;

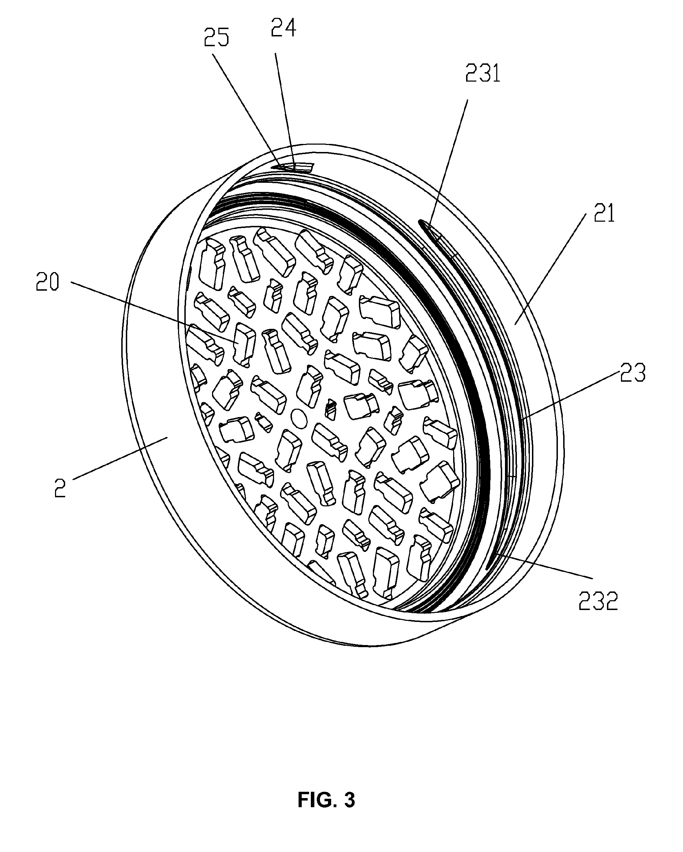

FIG. 3 is a stereogram of a bottle cap of a perfume bottle in accordance with one embodiment of the invention;

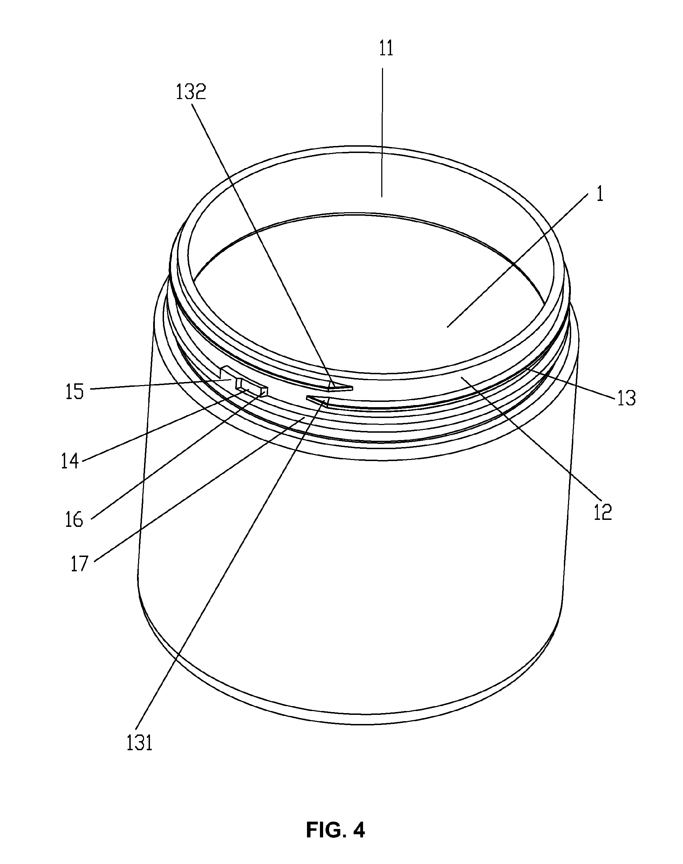

FIG. 4 is a stereogram of a bottle body of a perfume bottle in accordance with one embodiment of the invention; and

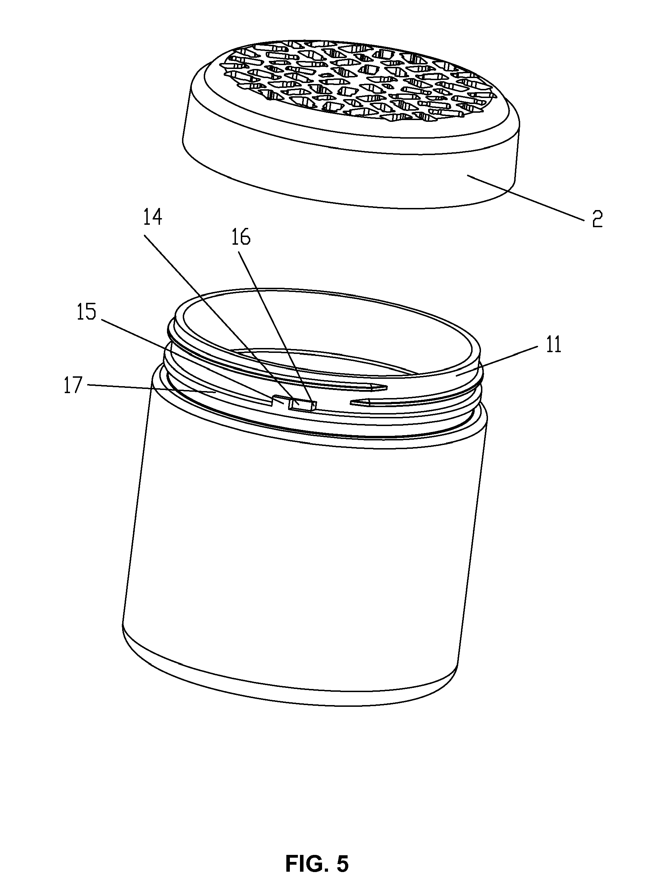

FIG. 5 is an exploded view of a perfume bottle in accordance with one embodiment of the invention.

For further illustrating the invention, experiments detailing a childproof perfume bottle are described below. It should be noted that the following examples are intended to describe and not to limit the invention.

A perfume bottle comprises a bottle body 1 and a bottle cap 2 covering the bottle body 1. The bottle body 1 comprises an upper connection part 11 comprising an external wall 12 comprising a male screw 13. The bottle cap 2 comprises an internal wall 21 comprising a female screw 23 matching the male screw 13 of the external wall 12. The external wall 12 of the upper connection part comprises a bulge, and a stop piece 15 is disposed at one end of the bulge 14. The internal wall 21 of the bottle cap 2 comprises a clamping block 24 which is capable of tightly fitting the bulge 14 of the external wall 12 after revolving the bottle cap to a certain angle. When the bottle cap 2 is screwed up and is connected to the upper connection part 11 of the bottle body 1, the clamping block 24 of the internal wall of the bottle cap 2 tightly fits the bulge 14 of the external wall of the bottle body. The clamping between the clamping block 24 and the bulge 14 is so tight that a child has no enough strength to detach the clamping block 24 from the bulge 14. Thus, the child cannot remove the bottle cap 2 from the bottle body 1. Only an adult who has enough strength can do so.

A transition slope is 16 disposed at another end of the bulge 14 to facilitate the clamping block 24 to slide to fit tightly the bulge 14. A clamping slope is 25 disposed at one end of the clamping block 24 to facilitate the clamping block 24 to slide to fit tightly the bulge 14.

The male screw 13 of the external wall 12 of the bottle body comprises a starting point 131 at a lower part of the external wall 12 and an end point 132 at an upper part of the external wall 12, and the bulge 14 and the stop piece 15 are disposed at front of the starting point 131 of the male screw. The female screw 23 of the internal wall 21 of the bottle cap comprises a starting point 231 at a lower part of the internal wall 21 and an end point 232 at an upper part of the internal wall 21, and the clamping block 24 is disposed at front of the starting point 231 of the female screw.

The male screw 13 of the external wall 12 of the bottle body and the female screw 23 of the internal wall 21 of the bottle cap are continuously convex or concave. Thus, the moving of the bottle cap on the bottle body is unidirectional.

The bottle body 1 and the bottle cap 2 are cylindrical, conical, or elliptic cylindrical. The bottle body 1 and the bottle cap 2 can be made of plastic, metal, glass and other materials by one-step injection molding.

The stop piece 15, the bulge 14, and the transition slope 16 are integrated, and the bottle body 1, the stop piece 15, the bulge 14, and the transition slope 16 are integrated by injection molding with plastic as raw materials.

The clamping block 24 and the clamping slope 25 are integrated, and the bottle cap 2, the clamping block 24, and the clamping slope 25 are integrated by injection molding with plastic as raw materials.

The diameter of the upper connection part 11 of the bottle body 1 is less than the diameter of the bottle body 1. The diameter of the upper connection part 11 of the bottle body 1 is slightly smaller than the diameter of the bottle cap 2 so that the bottle cap can cover the upper connection part 11 of the bottle body. The height of the upper connection part 11 of the bottle body is slightly smaller than that of the bottle cap.

An air vent 20 is disposed at a top surface of the bottle cap 2. The air vent 20 can be any through hole having any shapes. The number of the air vent 20 is one or more.

A sealing ring 17 is disposed at a lower part of the external wall 12 of the upper connection part of the bottle body, and the stop piece 15, the bulge 14, and the transition slope 16 are disposed above the sealing ring 17.

The stop piece 15, the bulge 14, and the transition slope 16 are tightly attached to the external wall 12 of the bottle body. The stop piece 15 is higher than the bulge 14. When the clamping block 24 slides along the transition slope 16 to lean against the stop piece 15, the front end of the clamping block 24 is impeded by the stop piece, whereby fixing the bottle cap 2.

The clamping block 24 is a curved strip protrusion tightly attached to the internal wall of the bottle cap. Optionally, the clamping block 24 is a convex block, a convex point, or a convex ring. The upper surfaces of the clamping block 24 and the clamping slope 25 are a convex arc in shape.

## Claims

1. A perfume bottle comprising a bottle body (1) and a bottle cap (2) covering the bottle body (1), **characterized in that** the bottle body (1) comprises an upper connection part (11) comprising an external wall (12) comprising a male screw (13); the bottle cap (2) comprises an internal wall (21) comprising a female screw (23) matching the male screw (13) of the external wall (12); the external wall (12) of the upper connection part comprises a bulge, and a stop piece (15) is disposed at one end of the bulge (14); and the internal wall (21) of the bottle cap (2) comprises a clamping block (24) which is capable of tightly fitting the bulge (14) of the external wall (12) after revolving the bottle cap to a certain angle.

2. The bottle of claim 1, **characterized in that** a transition slope is (16) disposed at another end of the bulge (14) to facilitate the clamping block (24) to slide to fit tightly the bulge (14).

3. The bottle of claim 1, **characterized in that** a clamping slope is (25) disposed at one end of the clamping block (24) to facilitate the clamping block (24) to slide to fit tightly the bulge (14).

4. The bottle of claim 1, **characterized in that** the male screw (13) of the external wall (12) of the bottle body comprises a starting point (131) at a lower part of the external wall (12) and an end point (132) at an upper part of the external wall (12), and the bulge (14) and the stop piece (15) are disposed at front of the starting point (131) of the male screw.

5. The bottle of claim 1, **characterized in that** the female screw (23) of the internal wall (21) of the bottle cap comprises a starting point (231) at a lower part of the internal wall (21) and an end point (232) at an upper part of the internal wall (21), and the clamping block (24) is disposed at front of the starting point (231) of the female screw.

6. The bottle of claim 2, **characterized in that** the stop piece (15), the bulge (14), and the transition slope (16) are integrated, and the bottle body (1), the stop piece (15), the bulge (14), and the transition slope (16) are integrated.

7. The bottle of claim 3, **characterized in that** the clamping block (24) and the clamping slope (25) are integrated, and the bottle cap (2), the clamping block (24), and the clamping slope (25) are integrated.

8. The bottle of claim 1, 2, 3, 4, 5, 6 or 7, **characterized in that** an air vent is disposed at a top surface of the bottle cap (2).

9. The bottle of claim 1, 2, 3, 4, 5, 6 or 7, **characterized in that** a sealing ring (17) is disposed at a lower part of the external wall (12) of the upper connection part of the bottle body, and the stop piece (15), the bulge (14), and the transition slope (16) are disposed above the sealing ring (17).

10. The bottle of claim 3, **characterized in that** upper surfaces of the clamping block (24) and the clamping slope (25) are a convex arc in shape.
